# FASCICULE DE BREVET EUROPEEN

(11) **EP 3 112 195 B1**
(45) Date de publication et mention de la délivrance du brevet: **16.12.2020**
(21) Numéro de dépôt: 16174708.4
(22) Date de dépôt: 16.06.2016
(51) Int. Cl.: B60J 5/14, B60J 5/12

(54) **RIDEAU SEGMENTÉ POUR LA FERMETURE D'UN ACCÈS À UN COMPARTIMENT D'UN VÉHICULE DE TRANSPORT DE MARCHANDISES**
SEGMENTIERTER VORHANG ZUM ABSPERREN DES ZUGANGS ZU EINEM ABTEIL EINES WARENTRANSPORTFAHRZEUGS
SEGMENTED CURTAIN FOR CLOSING ACCESS TO A COMPARTMENT OF A FREIGHT VEHICLE

(30) Priorité: 18.06.2015 FR 1555569
(43) Date de publication de la demande: 04.01.2017
(73) Titulaire: Jean Chereau SAS, 50220 Ducey (FR)
(72) Inventeur: LE GUERN, Tangui, 35340 Liffré (FR); YBERT, Florentin, 50800 FLEURY (FR)
(74) Mandataire: Casalonga

(56) Documents cités:
- EP-A1- 0 368 695
- EP-A1- 0 464 878
- EP-A2- 1 731 695
- US-A- 4 131 971
- US-A- 4 717 196

## Description

La présente invention concerne le domaine des véhicules de transport de marchandises tels que les porteurs, les camions, les semi-remorques ou les remorques, plus particulièrement ceux dont les compartiments de chargement, notamment à température dirigée, sont munis de rideaux segmentés de fermeture comprenant des panneaux successifs articulés entre eux, pouvant être abaissés en position de fermeture et relevés en position d'ouverture.

Généralement, de tels rideaux de fermeture sont déplacés entre leur position de fermeture et leur position d'ouverture manuellement ou par des moyens d'entraînement incluant des moteurs électriques et des boîtes mécaniques d'engrenages ou des actionneurs pneumatiques ou hydrauliques.

Couramment, en position de fermeture, les panneaux sont tous verticaux et, en position d'ouverture, les panneaux sont placés au-dessous du pavillon du compartiment. Néanmoins, la demande de brevet européen publiée sous le N° 2 692 561 décrit un rideau dans lequel, en position de fermeture, les panneaux sont verticaux, à l'exception du panneau supérieur qui est incliné, et, en position d'ouverture, les panneaux sont placés au-dessus du pavillon du compartiment.

Habituellement, les panneaux sont articulés entre eux par des paires d'articulations qui sont agencées aux extrémités des panneaux ou par des charnières espacées réparties sur la longueur des panneaux.

Les brevets EP - 0 367 625 et EP - 0 464 878 décrivent des portes sectionnelles de compartiments de véhicules, qui comprennent des panneaux reliés de façon articulée par l'intermédiaire de profilés flexibles, ces profilés flexibles présentant des portions opposées respectivement montées directement dans des rainures en C spécialement formées dans les chants des panneaux.

Les brevets US - 4 717 196 et CA - 2 185 080 décrivent également des portes sectionnelles de compartiments de véhicules, qui comprennent des panneaux reliés de façon articulée par l'intermédiaire de profilés flexibles, ces profilés flexibles présentant des portions opposées qui sont respectivement prises ou pincées entre les panneaux et des pièces complémentaires de montage.

Néanmoins, les articulations décrites dans les brevets ci-dessus sont encombrantes et nécessitent des formes complémentaires des panneaux et des profilés flexibles. En outre, en position de fermeture, des difficultés subsistent en ce qui concerne l'étanchéité des rideaux aux intempéries et aux poussières et en ce qui concerne l'isolation thermique entre l'intérieur des compartiments et l'extérieur.

Selon un mode de réalisation, il est proposé un rideau segmenté pour la fermeture d'un accès à un compartiment d'un véhicule de transport de marchandises.

Le rideau comprend au moins deux panneaux longitudinaux successifs et un élément longitudinal d'articulation reliant ces panneaux ; cet élément longitudinal monobloc d'articulation comprenant une première partie longitudinale de fixation montée sur l'un des panneaux, une seconde partie longitudinale de fixation montée sur l'autre panneau et au moins une partie longitudinale de jonction interposée localement entre lesdites parties de fixation ; lesdites parties de fixation étant en une matière rigide et ladite partie de jonction étant en une matière déformable et étant apte à permettre par déformation le pivotement, selon un axe longitudinal, desdits panneaux l'un par rapport à l'autre ; ladite partie de jonction déformable et lesdites parties de fixation étant reliées par adhésion moléculaire.

Les panneaux longitudinaux comprennent des faces en regard de section en forme d'arcs de cercles centrés sur ladite partie de jonction, ces faces se déplaçant l'une par rapport à l'autre lorsque les panneaux sont pivotés.

Ladite partie de jonction déformable et lesdites parties de fixation peuvent être en des matières plastiques différentes.

Lesdites parties de fixation peuvent être formées par des profilés longitudinaux et ladite partie de jonction peut être formée par au moins une lamelle longitudinale.

Lesdites parties de fixation dudit élément longitudinal d'articulation peuvent comprendre des portions longitudinales qui, en position de fermeture, viennent en contact l'une sur l'autre à distance de ladite partie de jonction, de façon à délimiter un espace ou canal tubulaire longitudinal.

Au moins un joint longitudinal d'étanchéité peut être interposé, en position de fermeture, entre au moins l'une des parties longitudinales de fixation et au moins l'un des panneaux.

Lesdits panneaux longitudinaux peuvent comprendre des portions longitudinales qui, en position de fermeture, viennent en regard l'une de l'autre, un joint d'étanchéité étant interposé entre ces faces.

Lesdites parties de fixation peuvent être au moins en partie encastrées dans des feuillures longitudinales desdits panneaux.

Lesdites parties de fixation peuvent être montées sur des chants adjacents desdits panneaux.

Il est également proposé un véhicule de transport de marchandises, équipé du rideau ci-dessus proposé.

Des modes de réalisation d'un rideau segmenté mobile de fermeture d'un accès à un compartiment, notamment à température dirigée, d'une carrosserie pour véhicule de transport de marchandises, selon la présente invention, vont maintenant être décrits à titre d'exemples non limitatifs, illustrés par le dessin annexé sur lequel :
- la figure 1 représente une vue en perspective plongeante depuis l'arrière d'un véhicule, comprenant une carrosserie munie d'un rideau de fermeture ;
- la figure 2 représente une vue arrière extérieure en perspective du rideau de fermeture, en position abaissée de fermeture ;
- la figure 3 représente une vue intérieure en perspective du rideau de fermeture, en position abaissée de fermeture ;
- la figure 4 représente une coupe verticale d'un exemple de réalisation d'une liaison articulée entre deux panneaux du rideau de fermeture, en position alignée ;
- la figure 5 représente une coupe verticale de la liaison articulée entre deux panneaux de la figure 4, en position inclinée ;
- la figure 6 représente une coupe d'une partie longitudinale d'articulation de la liaison articulée des figures 4 et 5 ;
- la figure 7 représente une coupe verticale d'un autre exemple de réalisation d'une liaison articulée entre deux panneaux du rideau de fermeture, en position inclinée non couvert par l'invention;
- la figure 8 représente une coupe verticale de la liaison articulée entre deux panneaux de la figure 7, en position alignée ; et
- la figure 9 représente une coupe verticale d'une partie longitudinale d'articulation de la liaison articulée des figures 7 et 8.

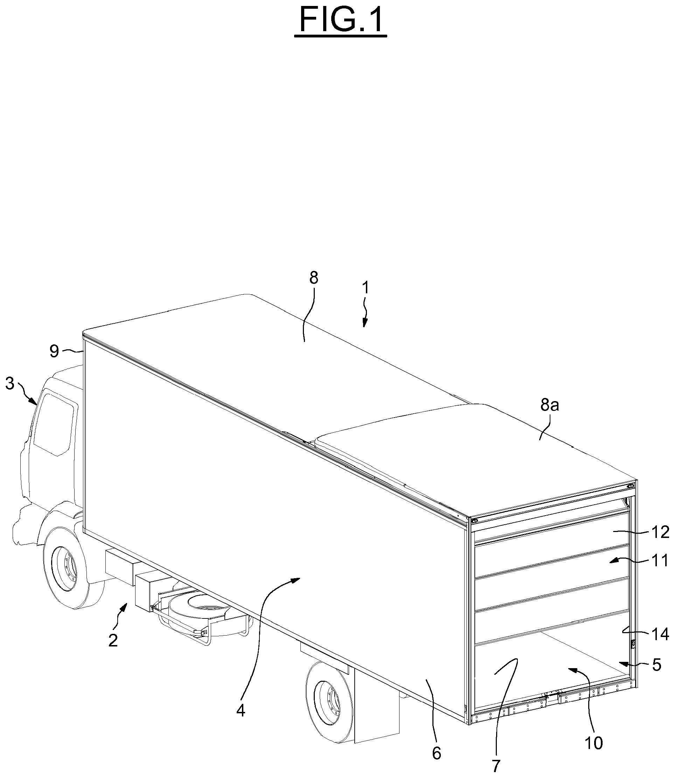

Comme illustré sur la figure 1, un véhicule 1 de transport de marchandises, en particulier un porteur ou camion, comprend à titre d'exemple, sur un châssis 2, une cabine avant de pilotage 3 et une carrosserie 4 comprenant un compartiment parallélépipédique 5 délimité par des flancs verticaux 6, un plancher horizontal 7 reliant les parties inférieures des flancs 6, un pavillon horizontal 8 reliant les parties supérieures des flancs longitudinaux 6 et une paroi transversale avant 9, de telle sorte que le compartiment 5 présente une ouverture d'accès arrière 10.

La carrosserie 4 est équipée d'un rideau segmenté mobile ou coulissant de fermeture 11 pour ouvrir/fermer l'ouverture d'accès arrière 10.

Dans la description qui suit, le terme « longitudinal » s'entend comme étant une direction allant d'une extrémité adjacente à un rail à l'autre extrémité adjacente à l'autre rail.

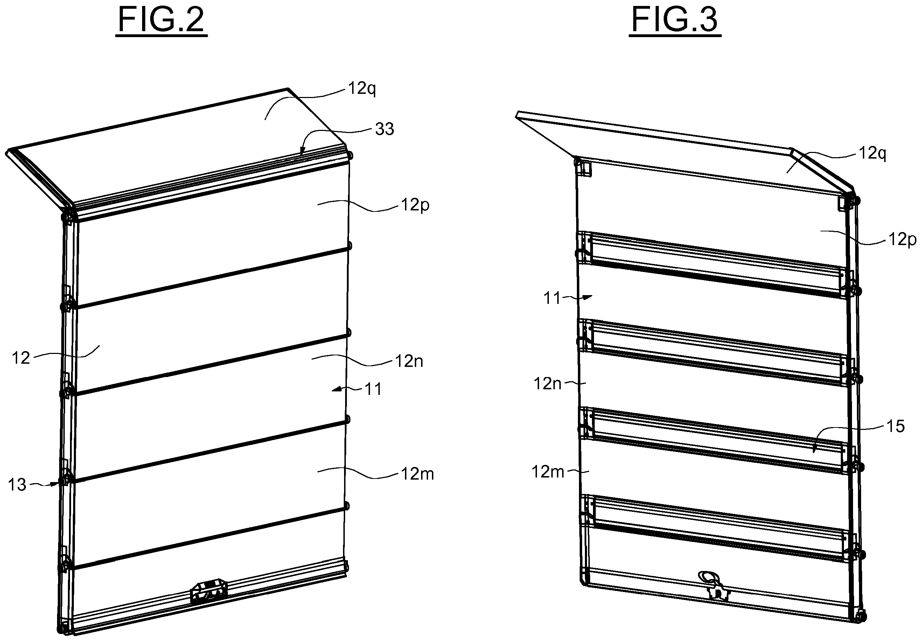

Comme illustré sur les figures 1 et 2, le rideau segmenté de fermeture 11 comprend une pluralité de panneaux longitudinaux successifs 12 de forme générale rectangulaire, à faces parallèles, qui sont articulés entre eux et qui portent à leurs extrémités opposées des organes de guidage 13 qui sont guidés par des rails opposés de guidage 14 de la carrosserie 4, de telle sorte que le rideau de fermeture 11 peut être déplacé entre une position abaissée de fermeture, dans laquelle il s'étend au moins en partie verticalement, et une position relevée d'ouverture, dans laquelle il s'étend au moins en partie horizontalement au-dessous du pavillon 8 ou au-dessus du pavillon 8, dans un espace entre le pavillon 8 et un carénage supérieur adapté 8a.

Notamment en position abaissée de fermeture, les panneaux longitudinaux 12 présentent des côtés ou faces intérieurs situés du côté du compartiment 5 et des côtés ou faces extérieurs tournés vers l'extérieur, c'est-à-dire vers l'arrière du véhicule.

Les rails opposés de guidage 14 présentent des parties verticales (non représentées) adjacentes aux bords verticaux arrière des flancs 6 de la carrosserie, du côté de leurs faces en vis-à-vis, des parties horizontales (non représentées) situées dans le voisinage du pavillon 8 de la carrosserie et des parties en forme d'arcs de cercles (non représentées) joignant tangentiellement ces parties verticales et ces parties horizontales. Lors du déplacement du rideau 11 le long des rails de guidage 14, en particulier au passage des parties en forme d'arcs de cercles, les panneaux 12 pivotent les uns par rapport aux autres.

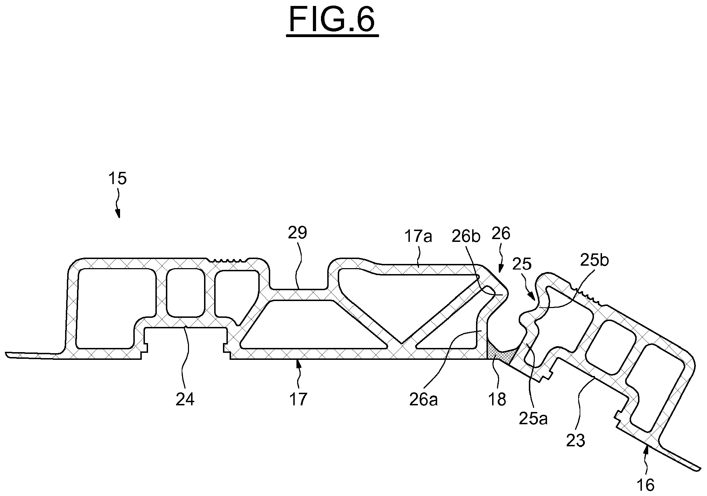

En se reportant aux figures 3 à 6, on peut voir que, selon un exemple de réalisation, deux panneaux longitudinaux successifs 12n et 12m sont reliés par un élément longitudinal d'articulation 15, situé du côté intérieur et qui s'étend sur substantiellement toute la longueur de ces panneaux.

L'élément longitudinal d'articulation 15, monobloc, comprend une partie longitudinale de fixation 16 qui est reliée au panneau longitudinal 12m, une partie longitudinale de fixation 17 qui est reliée au panneau longitudinal 12n et une partie longitudinale de jonction 18 interposée localement entre lesdites parties de fixation 16 et 17, sur le côté intérieur.

Les parties longitudinales de fixation 16 et 17 sont en une matière rigide et la partie de jonction 18 est en une matière souple ou déformable apte à former une articulation à axe longitudinal pour permettre le pivotement des panneaux 12m et 12n l'un par rapport à l'autre.

Les parties longitudinales de fixation 16 et 17 se présentent sous la forme des profilés tubulaires de sections substantiellement rectangulaires, présentant des canaux ou espaces creux longitudinaux délimités par des cloisons intérieures.

Les parties longitudinales de fixation 16 et 17 sont encastrées à plat et en coin respectivement dans des feuillures longitudinales 19 et 20 à angles droits, aménagées dans les coins adjacentes des panneaux 12m et 12n situés du côté intérieur.

Dans le sens du plan du panneau 12m, la partie longitudinale de fixation 16 est moins large que la feuillure longitudinale 19, de telle sorte qu'une partie longitudinale 19a de la feuillure 19, située du côté de la feuillure 20 du panneau 12n, n'est pas recouverte par la partie longitudinale de fixation 16.

Dans le sens du plan du panneau 12n, la partie longitudinale de fixation 17 est plus large que la feuillure longitudinale 20, de telle sorte que la partie longitudinale de fixation 17 présente une portion longitudinale 17a en porte-à-faux en dehors de la feuillure 20, du côté du panneau 12m et engagée dans la feuillure 19 de ce panneau 12m.

Les parties longitudinales de fixation 16 et 17 sont montées et fixées aux panneaux 12m et 12n grâce à une pluralité de vis 21 et 22 qui les traversent dans le sens de l'épaisseur des panneaux 12m et 12n et sont espacées longitudinalement, les têtes de ces vis 21 et 22 étant logées dans des rainures longitudinales intérieures 23 et 24 des parties longitudinales de fixation 16 et 17, situées du côté du compartiment 5. Les parties longitudinales de fixation 16 et 17 pourraient être fixées par collage ou par vis et collage. Les rainures longitudinales 23 et 24 sont fermées par des baguettes longitudinales 23a et 24a encliquetées.

Les parties longitudinales de fixation 16 et 17 présentent des flancs ou chants en vis-à-vis 25 et 26. Ces flancs 25 et 26 présentent des portions longitudinales 25a et 26a du côté du compartiment 5, situées à distances l'une de l'autre et entre lesquelles s'étend la partie de jonction 18 sous la forme d'une lamelle accolée à ces portions 24a et 25a et du côté intérieur. Les flancs 25 et 26 présentent en outre des portions longitudinales 24b et 25b situées du côté extérieur, formées l'une en saillie et l'autre en creux et situées, dans le sens de l'épaisseur des panneaux, à distance de la partie de jonction 18.

Les flancs longitudinaux adjacents 27 et 28 des panneaux longitudinaux 12m et 12n, formés entre les bords des feuillures 19 et 20 et les faces extérieures de ces panneaux, sont de sections en forme d'arcs de cercles, centrés sur l'axe d'articulation déterminé par la partie longitudinale de jonction 18.

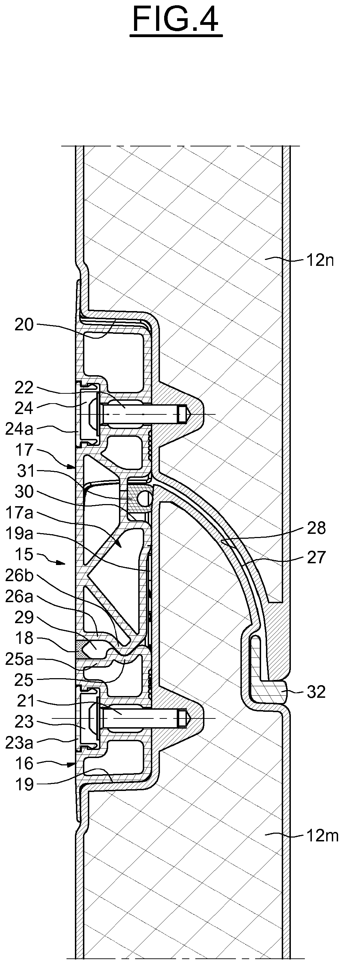

Comme illustré sur la figure 4, dans une position d'alignement ou de fermeture dans laquelle les panneaux 12m et 12n sont alignés, la disposition est la suivante.

Les parties longitudinales 16 et 17 de l'élément longitudinal d'articulation 15 sont alignées et les portions 25b et 26b des flancs 25 et 26 de l'élément longitudinal d'articulation 15 sont engagées l'une dans l'autre et en contact. Un espace longitudinal ou canal longitudinal 29, tubulaire, est alors créé entre les portions 25b et 26b des flancs 25 et 26 de l'élément longitudinal d'articulation 15 et la partie longitudinale de jonction 18. Ce canal longitudinal tubulaire 29 engendre une isolation thermique dans le sens de l'épaisseur des panneaux 12m et 12n.

La portion longitudinale 17a en porte-à faux de la partie longitudinale 17 de l'élément longitudinal d'articulation 15 est engagée dans la feuillure 19, à plat sur la portion 19a non recouverte par la partie longitudinale 16 de l'élément longitudinal d'articulation 15.

Les faces intérieures des parties longitudinales 16 et 17 de l'élément longitudinal d'articulation 15 sont sensiblement dans le plan des faces intérieures des panneaux 12m et 12n.

Le flanc longitudinal 27 du panneau longitudinal 12n recouvre, à faible distance, le flanc longitudinal 26 du panneau longitudinal 12m.

La portion longitudinale en porte-à-faux 17a de la partie longitudinale 17 de l'élément longitudinal d'articulation 15 porte, dans une rainure longitudinale 30, un joint longitudinal intérieur d'étanchéité 31 qui, dans le sens de l'épaisseur du panneau 12m, est en appui contre sur la portion 19a de la feuille 19 non recouverte par la partie longitudinale 16.

En outre, un joint longitudinal extérieur d'étanchéité 32 est porté par le bord longitudinal extérieur du flanc longitudinal 27 du panneau 12m, contre lequel le bord longitudinal extérieur du flanc 28 du panneau 12n est en appui.

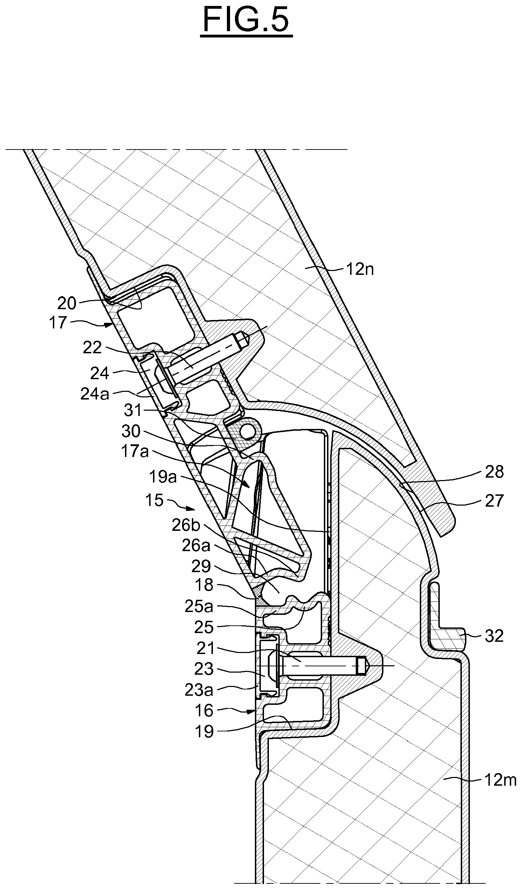

Comme illustré sur la figure 5, les panneaux longitudinaux 12m et 12n peuvent pivoter l'un par rapport à l'autre et prendre des positions inclinées l'un par rapport à l'autre, en même temps que les parties longitudinales de fixation 16 et 17 de l'élément longitudinal d'articulation 15 qu'ils portent, grâce à l'existence de la partie longitudinale déformable de jonction 18 qui constitue une charnière déformable par flexion substantiellement selon un axe longitudinal de pivotement.

En position pivotée, les flancs 25 et 26 des parties longitudinales de fixation 16 et 17 sont écartés angulairement. La portion longitudinale 17a de la partie longitudinale 17 et le joint longitudinal qu'elle porte sont écartés de la partie longitudinale 19a de la feuillure 19. Les flancs longitudinaux 27 et 28 des panneaux longitudinaux 12m et 12n ont glissé l'un au-dessus de l'autre, le bord longitudinal extérieur du flanc 28 étant éloigné du joint longitudinal extérieur d'étanchéité 31.

Selon une variante de réalisation, l'élément longitudinal d'articulation peut résulter d'une fabrication par extrusion simultanée de deux matières plastiques, l'une étant destinée à constituer les parties longitudinales rigides de fixation 16 et 17 et l'autre étant destinée à constituer la partie longitudinale déformable de jonction 18 en forme de lamelle, de telle sorte qu'il se produise une liaison par adhésion moléculaire entre ces matières. Par exemple, les parties longitudinales rigides de fixation 16 et 17 peuvent être en polychlorure de vinyle (PVC) et la partie longitudinale de jonction 18 peut être en polyuréthane (PU).

Selon une autre variante de réalisation, les parties longitudinales rigides de fixation 16 et 17 peuvent être fabriquées séparément, en matière plastique ou en métal, et la partie longitudinale déformable de jonction 18 peut être constituée par une lamelle, en matière plastique ou en métal, collée entre les parties longitudinales rigides de fixation 16 et 17, de telle sorte qu'il se produise, là également, une liaison par adhésion moléculaire.

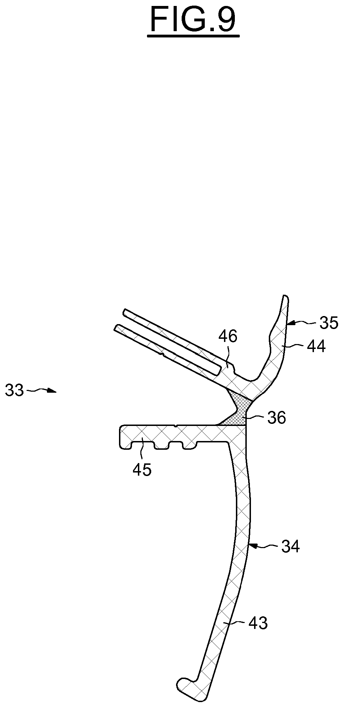

En se reportant aux figures 3 et 7 à 9, on peut voir que, selon un autre exemple de réalisation, deux panneaux longitudinaux successifs 12p et 12q sont reliés par un élément longitudinal d'articulation 33 qui s'étend sur substantiellement toute la longueur de ces panneaux.

De façon équivalente à l'exemple précédent de réalisation, l'élément longitudinal d'articulation 33, monobloc, comprend une partie longitudinale de fixation 34 qui est reliée au panneau longitudinal 12p, une partie longitudinale de fixation 35 qui est reliée au panneau longitudinal 12q et une partie longitudinale de jonction 36 interposée localement entre lesdites parties de fixation 16 et 17. Les parties longitudinales de fixation 34 et 35 sont en une matière rigide et la partie de jonction 36 est en une matière déformable apte à former une articulation à axe longitudinal pour permettre un pivotement des panneaux 12p et 12q l'un par rapport à l'autre.

Les chants adjacents 37 et 38 des panneaux 12p et 12q sont biseautés du côté intérieur et du côté extérieur, de sorte qu'ils sont substantiellement de sections en forme de L ou de V. Les chants adjacents 37 et 38 présentent ainsi des faces biseautées extérieures 39 et 40 et des faces biseautées intérieures 41 et 42 et présentent des bords longitudinaux adjacents en coins 49a et 50a.

Les parties longitudinales de fixation 34 et 35 de l'élément longitudinal d'articulation 33 sont montées à cheval sur les chants adjacents 37 et 38 des panneaux 12p et 12q, de sorte qu'elles sont de sections en forme de L ou de V, correspondant aux chants 37 et 38 des panneaux 12p et 12q.

Les parties longitudinales de fixation 34 et 35, en forme de profilés, comprennent des ailes longitudinales extérieures 43 et 44 en appui sur les faces biseautées extérieures 39 et 40 des panneaux 12p et 12q et comprennent des ailes longitudinales intérieures 45 et 46 en appui sur les faces biseautées extérieures 41 et 42 des panneaux 12p et 12q.

Les parties longitudinales de fixation 34 et 35 sont fixées sur les panneaux 12p et 12q par l'intermédiaire d'une pluralité de vis 47 et 48 qui traversent leurs ailes intérieures 43 et 46 et qui sont réparties longitudinalement. Les parties longitudinales de fixation 34 et 35 pourraient être fixées par collage ou par vis et collage.

Les bords longitudinaux adjacents en coins 49 et 50 des parties longitudinales de fixation 34 et 35 sont reliés par la partie longitudinale déformable de jonction 36, cette dernière étant en forme de lamelle de façon équivalente à l'exemple précédent. La partie longitudinale déformable de jonction 36 est par exemple située sensiblement au milieu de l'épaisseur des panneaux 12p et 12q.

L'aile intérieure 46 de la partie longitudinale de fixation 35 solidaire du panneau longitudinal 12q est munie d'un joint tubulaire longitudinal intérieur d'étanchéité 51, situé en vis-à-vis de la face biseautée intérieure 41 du panneau longitudinal 12p. Le joint longitudinal intérieur d'étanchéité 51 présente une partie longitudinale d'étanchéité prise entre l'aile intérieure 46 de la partie longitudinale de fixation 35 et la face biseautée intérieure 42 du panneau 12q.

Un joint longitudinal extérieur d'étanchéité 43a est prévu entre l'aile extérieure 43 de de la partie longitudinale de fixation 34 et le panneau longitudinal 12p.

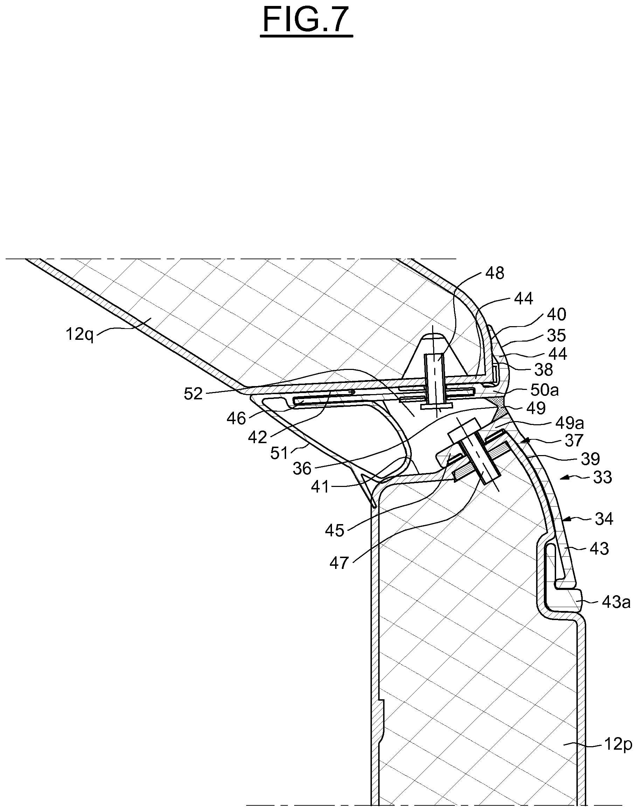

Comme illustré sur la figure 7, dans une position d'inclinaison ou de fermeture dans laquelle les panneaux 12q et 12q sont inclinés l'un par rapport à l'autre, la disposition est la suivante.

Les faces biseautés intérieures 41 et 42 et en conséquence les ailes 45 et 46 des parties de fixation 34 et 35 de l'élément longitudinal d'articulation 33 sont rapprochées et forment un angle aigu.

Le joint longitudinal 51 porté par le panneau 12q est en appui sur la face biseautée intérieure 41 du panneau 12p. Un espace longitudinal ou canal longitudinal 52, tubulaire, est alors créé entre le joint longitudinal intérieur d'étanchéité 51 et la partie longitudinale de jonction 36 qui sont à distance l'un de l'autre. Ce canal longitudinal tubulaire 52 engendre une isolation thermique dans le sens de l'épaisseur des panneaux 12p et 12q.

Les faces biseautés extérieures 39 et 40 et en conséquence les ailes 43 et 44 des parties de fixation 34 et 35 de l'élément longitudinal d'articulation 33 sont éloignées et forment un angle obtus très ouvert de sorte que, sur le côté extérieur, la zone de jonction des panneaux 12p et 12q est substantiellement arrondie.

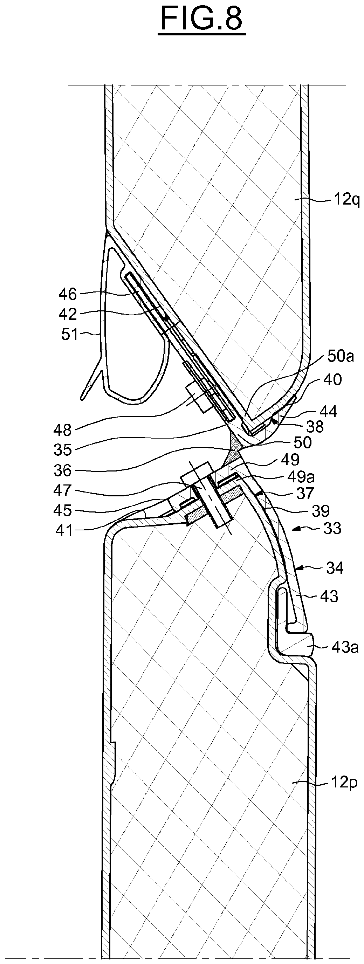

Comme illustré sur la figure 8, dans une position d'alignement dans laquelle les panneaux 12p et 12q sont alignés, la disposition est la suivante.

Les faces biseautés intérieures 41 et 42 et en conséquence les ailes 45 et 46 des parties de fixation 34 et 35 de l'élément longitudinal d'articulation 33 sont éloignées et forment un angle aigu plus ouvert.

Le joint longitudinal 51 porté par le panneau 12q est écarté de la face biseautée intérieure 41 du panneau 12p.

Les faces biseautés extérieures 39 et 40 et en conséquence les ailes 43 et 44 des parties de fixation 34 et 35 de l'élément longitudinal d'articulation 33 sont rapprochées et forment un angle obtus moins ouvert.

De façon équivalente à l'exemple précédent, le pivotement des panneaux 12p et 12q entre la position d'inclinaison de la figure 7 et la position d'alignement de la figure 8 est assuré par l'intermédiaire de la partie longitudinale déformable de jonction 36 qui se déforme par flexion.

La fabrication de l'élément longitudinal d'articulation 33 peut être réalisée de façon équivalente à l'élément longitudinal d'articulation 15 de l'exemple précédent.

Selon un exemple particulier, les montages qui viennent d'être décrits peuvent avantageusement être appliqués au rideau segmenté décrit dans la demande de brevet européen publiée sous le N° 2 692 561.

Le montage décrit en référence aux figures 4 et 5 peut être appliqué pour relier de façon articulée les panneaux se plaçant verticalement en position de fermeture, comme illustré sur les figures 2 et 3.

Le montage décrit en référence aux figures 7 et 8 peut être appliqué pour relier de façon articulée le panneau supérieur ou de tête se plaçant de façon inclinée en position de fermeture et le panneau adjacent se plaçant verticalement en position de fermeture, comme illustré sur les figures 2 et 3.

Le rideau qui vient d'être décrit présente en particulier les avantages suivants.

La partie longitudinale de jonction, qui s'étend sur toute la longueur des panneaux, combinée avec les parties longitudinales de fixation et éventuellement avec les joints longitudinaux, constitue une barrière d'étanchéité à l'air entre l'extérieur et l'intérieur du compartiment et vice versa, aux intempéries, à la poussière, et thermique.

Comme la partie longitudinale de jonction déformable n'est pas directement montée sur les panneaux, d'une part les parties longitudinales de fixation rigides et les panneaux peuvent être en conséquence conformés de façon à être accouplés, à volonté en fonction des besoins, indépendamment de la partie longitudinale de jonction déformable, et, d'autre part la partie longitudinale de jonction déformable peut être conformée et située entre les parties longitudinales de fixation rigides, indépendamment des panneaux.

Le rideau qui vient d'être décrit pourrait être appliqué à la fermeture d'un accès latéral à un compartiment d'un véhicule.

Le rideau qui vient d'être décrit est par exemple adapté pour équiper un compartiment frigorifique de toutes sortes de véhicules de transport de marchandises.

## Revendications

1. Rideau segmenté pour la fermeture d'un accès à un compartiment d'un véhicule de transport de marchandises, rideau comprenant au moins deux panneaux longitudinaux successifs et un élément longitudinal monobloc d'articulation (15 ; 33) reliant ces panneaux, ledit élément longitudinal d'articulation comprenant une première partie longitudinale de fixation (16 ; 34) montée sur l'un des panneaux, une seconde partie longitudinale de fixation (17 ; 35) montée sur l'autre panneau et au moins une partie longitudinale de jonction (18 ; 36) interposée localement entre lesdites parties de fixation ; lesdites parties de fixation étant en une matière rigide et ladite partie de jonction étant en une matière déformable et étant apte à permettre par déformation le pivotement, selon un axe longitudinal, desdits panneaux l'un par rapport à l'autre ; **caractérisé par le fait que** ladite partie de jonction déformable (18 ; 36) et lesdites parties de fixation (16, 17 ; 34, 35) sont reliées par adhésion moléculaire, et **par le fait que** les panneaux longitudinaux comprennent des faces en regard (27, 28) de section en forme d'arcs de cercles centrés sur ladite partie de jonction (18) dudit élément longitudinal d'articulation, ces faces se déplaçant l'une par rapport à l'autre lorsque les panneaux sont pivotés.

2. Rideau selon la revendication 1, dans lequel ledit élément longitudinal monobloc d'articulation (15 ; 33) reliant ces panneaux est situé du côté intérieur de ces panneaux.

3. Rideau selon la revendication 1 ou 2, dans lequel ladite partie de jonction déformable (18 ; 36) et lesdites parties de fixation (16, 17 ; 34, 35) sont en des matières plastiques différentes.

4. Rideau selon l'une quelconque des revendications précédentes, dans lequel lesdites parties de fixation (16, 17 ; 34, 35) sont formées par des profilés longitudinaux et ladite partie de jonction (18 ; 36) est formée par au moins une lamelle longitudinale.

5. Rideau selon l'une quelconque des revendications précédentes, dans lequel lesdites parties de fixation dudit élément longitudinal d'articulation comprennent des portions longitudinales (25b, 26b) qui, en position de fermeture, viennent en contact l'une sur l'autre à distance de ladite partie de jonction (18), de façon à délimiter un espace ou canal tubulaire longitudinal (29).

6. Rideau selon l'une quelconque des revendications précédentes, dans lequel au moins un joint longitudinal d'étanchéité (31) est interposé, en position de fermeture, entre au moins l'une des parties longitudinales de fixation et au moins l'un des panneaux.

7. Rideau selon l'une quelconque des revendications précédentes, dans lequel lesdits panneaux longitudinaux comprennent des portions longitudinales qui, en position de fermeture, viennent en regard l'une de l'autre, un joint d'étanchéité (32, 51) étant interposé entre ces faces.

8. Rideau selon l'une quelconque des revendications précédentes, dans lequel lesdites parties de fixation sont au moins en partie encastrées dans des feuillures longitudinales (19, 20) desdits panneaux.

9. Rideau selon l'une quelconque des revendications précédentes, dans lequel lesdites parties de fixation sont montées sur des chants adjacents (37, 38) desdits panneaux.

10. Véhicule de transport de marchandises, équipé du rideau selon l'une quelconque des revendications précédentes.

## Patentansprüche

1. Segmentierter Vorhang zum Absperren eines Zugangs zu einem Abteil eines Warentransportfahrzeugs, wobei der Vorhang mindestens zwei aufeinanderfolgende Längsplatten und ein einteiliges Längsgelenkelement (15; 33) umfasst, das diese Platten verbindet, wobei das Längsgelenkelement ein erstes Längsbefestigungsteil (16; 34) umfasst, das auf einer der Platten montiert ist, ein zweites Längsbefestigungsteil (17; 35), das auf der anderen Platte montiert ist, und mindestens ein Längsanschlussteil (18; 36), das lokal zwischen den Befestigungsteilen eingesetzt ist; wobei die Befestigungsteile aus einem starren Material sind, und das Anschlussteil aus einem verformbaren Material ist, und imstande ist, durch Verformen das Drehen entlang einer Längsachse der Platten in Bezug zueinander zu erlauben; **dadurch gekennzeichnet, dass** das verformbare Anschlussteil (18; 36) und die Befestigungsteile (16, 17; 34, 35) durch molekulare Haftung verbunden sind, und dadurch dass die Längsplatten gegenüberliegende Seiten (27, 28) im Querschnitt in Kreisbogenform umfassen, die auf dem Anschlussteil (18) des Längsgelenkelements zentriert sind, wobei sich diese Seiten in Bezug zueinander verschieben, wenn die Platten gedreht werden.

2. Vorhang nach Anspruch 1, wobei sich das einteilige Längsgelenkelement (15; 33), das diese Platten verbindet, an der Innenseite dieser Platten befindet.

3. Vorhang nach Anspruch 1 oder 2, wobei das verformbare Anschlussteil (18; 36) und die Befestigungsteile (16, 17; 34, 35) aus unterschiedlichen Kunststoffmaterialien sind.

4. Vorhang nach einem der vorstehenden Ansprüche, wobei die Befestigungsteile (16, 17; 34, 35) durch Längsprofile gebildet sind, und das Anschlussteil (18; 36) durch mindestens eine Längslamelle gebildet wird.

5. Vorhang nach einem der vorstehenden Ansprüche, wobei die Befestigungsteile des Längsgelenkelements Längsabschnitte (25b, 26b) umfassen, die in Schließposition in Kontakt aufeinander auf Abstand zum Anschlussteil (18) kommen, um einen rohrförmigen Längsraum oder Längskanal (29) zu begrenzen.

6. Vorhang nach einem der vorstehenden Ansprüche, wobei mindestens eine Längsdichtung (31) in Schließposition zwischen mindestens einem der Längsbefestigungsteile und mindestens einer der Platten eingesetzt ist.

7. Vorhang nach einem der vorstehenden Ansprüche wobei die Längsplatten Längsabschnitte umfassen, die in Schließposition einander gegenübertreten, wobei eine Dichtung (32, 51) zwischen diesen Seiten eingesetzt ist.

8. Vorhang nach einem der vorstehenden Ansprüche, wobei die Befestigungsteile mindestens teilweise in Längsfalze (19, 20) der Platten eingelassen sind.

9. Vorhang nach einem der vorstehenden Ansprüche, wobei die Befestigungsteile an den angrenzenden Kanten (37, 38) der Platten montiert sind.

10. Warentransportfahrzeug, das mit dem Vorhang nach einem der vorstehenden Ansprüche ausgerüstet ist.

## Claims

1. A segmented curtain for closing an access to a compartment of a cargo transport vehicle, curtain comprising at least two successive longitudinal panels and a one-piece longitudinal articulation element (15; 33) connecting these panels, said longitudinal articulation element comprising a first longitudinal fastening part (16; 34) mounted on one of the panels, a second longitudinal fastening part (17; 35) mounted on the other panel and at least one longitudinal junction part (18; 36) interposed locally between said fastening parts; said fastening parts being made of a rigid material and said junction part being made of a deformable material and being able to allow, by deformation, the pivoting, along a longitudinal axis, of said panels relative to each other; **characterised by** the fact that said deformable junction part (18; 36) and said fastening parts (16, 17; 34, 35) are connected by molecular adhesion, and by the fact that the longitudinal panels comprise opposite faces (27, 28) having a circular arc-shaped section centred on said junction part (18) of said longitudinal articulation element, these faces displacing relative to each other when the panels are pivoted.

2. The curtain according to claim 1, wherein said one-piece longitudinal articulation element (15; 33) connecting these panels is located on the inner side of these panels.

3. The curtain according to claim 1 or 2, wherein said deformable junction part (18; 36) and said fastening parts (16, 17; 34, 35) are made of different plastic materials.

4. The curtain according to any one of the preceding claims, wherein said fastening parts (16, 17; 34, 35) are formed by longitudinal profiles and said junction part (18; 36) is formed by at least one longitudinal strip.

5. The curtain according to any one of the preceding claims, wherein said fastening parts of said longitudinal articulation element comprise longitudinal portions (25b, 26b) which, in the closed position, come into contact one on top of the other at a distance from said junction part (18), so as to delimit a longitudinal tubular space or channel (29).

6. The curtain according to any one of the preceding claims, wherein at least one longitudinal seal (31) is interposed, in the closed position, between at least one of the longitudinal fastening parts and at least one of the panels.

7. The curtain according to any one of the preceding claims, wherein said longitudinal panels comprise longitudinal portions which, in the closed position, face each other, a seal (32, 51) being interposed between these faces.

8. The curtain according to any one of the preceding claims, wherein said fastening parts are at least partly embedded in longitudinal rabbets (19, 20) of said panels.

9. The curtain according to any one of the preceding claims, wherein said fastening parts are mounted on adjacent rims (37, 38) of said panels.

10. A cargo transport vehicle, equipped with the curtain according to any one of the preceding claims.
